Europäisches Patentamt

European Patent Office

Office européen des brevets

(11) Publication number: **0 303 730**
**A2**

# (12) EUROPEAN PATENT APPLICATION

(21) Application number: 87112255.2

(22) Date of filing: 24.10.84

(51) Int. Cl.⁴: **G01T 1/20 , G01T 1/202**

(30) Priority: 09.11.83 US 549865
08.10.84 DE 3436851

(43) Date of publication of application:
**22.02.89 Bulletin 89/08**

(60) Publication number of the earlier application in
accordance with Art.76 EPC: **0 147 561**

(84) Designated Contracting States:
**DE FR GB NL**

(71) Applicant: **Siemens Aktiengesellschaft Berlin
und München
Wittelsbacherplatz 2
D-8000 München 2(DE)**

(72) Inventor: **Schubert, Wolfgang, Dr.
Fontanestrasse 3
D-8520 Erlangen(DE)**

(54) Scintillation crystal for a radiation detector and method for producing same.

(57) A scintillation crystal arrangement for a radiation detector, said arrangement comprising:

a) a substrate (18; 29b);

b) an elastic intermediate layer (25a; 25b) provided on said substrate (18; 29b); and

c) a scintillation layer (22) evaporated on said intermediate layer (18; 29b), said scintillation layer (22) emitting light in response to impinging gamma radiation (11).

FIG 1

## BACKGROUND OF THE INVENTION

### 1. Field of the Invention

This invention relates to a scintillation crystal arrangement for a radiation detector. A special radiation detector in which use may be made of a scintillation crystal arrangement according to the invention is a scintillation gamma camera of the Anger-type.

### 2. Description of Prior Art

The basic principle of a scintillation gamma camera of the Anger-type making use of a thallium-activated sodium iodide (NaI(Tl)) scintillation crystal is described in U.S. Patent 3,011,057 (Anger). NaI-(Tl) has a relatively high energy resolution. However, its mechanical properties are relatively poor. Due to this it happens very often that the scintillation crystal breaks.

U.S. Patent 3,693,018 (Spicer) illustrates an x-ray image intensifier tube having the photo-cathode formed directly on the pick-up screen. The x-ray sensitive phosphor of the pick-up screen is selected from the class consisting of alkali metal halides, preferably from CsI, NaI and KI. The photo-cathode is preferably selected from the class of $Cs_3Sb$, $K_3Sb$ and $Rb_3Sb$. This enhances the quantum efficiency of the photo-cathode, thereby improving the sensitivity of the intensifier tube.

U.S. Patent 3,980,888 (Gudden et al.) describes a self-supporting lumminescent screen. A carrier consisting of aluminum carries a layer of activated cesium iodide (CsI(Na)) which is deposited on the carrier by evaporation.

HEALTH PHYSICS, vol. 34, no. 5, May 1978, pages 486-489, Pergamon Press, Oxford, GB; A.J. Ahlquist et al depict a "phoswich system", wherein a thin (NaI(Tl) crystal is backed by a CsI(Na) crystal, which is much thicker, e.g. 38 times thicker than the NaI(Tl) crystal (page 488, left column, lines 6 through 9).

U.S. Patent 3,706,885 describes a photocathode-phosphor imaging systam for x-ray camera tubes. In this system after the formation of a phosphor layer, a barrier layer is applied thereon. The barrier layer comprises a thin layer of light transparent material. This thin layer of transparent material is capable of protecting the phosphor layer from chemical attack by the materials in the photocathode layer, yet allows a good transmission of light therethrough.

It is an object of the manufacturer of a scintillation camera to replace the comparatively expensive and sensitive scintillator single crystal by an evaporated scintillation layer which can be produced at comparatively low cost. Yet, such a replacement is not possible without any additional measures, since a number of physical parameters such as brittleness, different coefficients of expansion, etc. seem to be incompatible with each other. These parameters have to be observed very closely. In addition it must be taken into account that the scintillation layer has to be protected against humidity and mechanical effects such as stress. If possible, the scintillation layer produced by evaporation should be firmly attached to the envelope or housing of the scintillator arrangement already during the layer producing process, due to cost saving reasons.

## SUMMARY OF THE INVENTION

### 1. Objects

It is an object of this invention to provide a scintillation crystal arrangement for a radiation detector, in particular for a scintillation gamma camera, which has a relatively high energy resolution as well as relatively good mechanical proper ties, particularly in terms of mechanical strength.

### 2. Summary

According to this invention a scintillation crystal arrangement is provided for a radiation detector which comprises
   a) a substrate;
   b) an elastic intermediate layer provided on said substrate; and
   c) a scintillation layer evaporated on said intermediate layer, said scintillation layer emitting light in response to impinging gamma radiation.

According to this invention there is also provided a scintillation crystal arrangement for a radiation detector which comprises
   a) a substrate having an uneven surface; and
   b) a scintillation layer evaporated on said substrate, said scintillation layer emitting light in response to impinging gamma radiation.

Further according to this invention a scintillation crystal arrangement is provided for a radiation detector, which comprises

a) a freely supported scintillation layer emitting light in response to impinging gamma radiation;

b) two protective layers, said scintillation layer being sandwiched by said protective layers; and

c) an elastic light coupling medium for coupling one of said two protective layers to a glass plate.

The foregoing and other objects, features and advantages of the invention will be apparent from the following more particular description of preferred embodiments of the invention, as illustrated in the accompanying drawings.

## BRIEF DESCRIPTION OF THE DRAWINGS

In the drawings:

Fig. 1 is a sectional view of a gamma camera head utilizing a second embodiment of the invention;

Fig. 2 illustrates a modification of the embodiment according to Fig. 1;

Fig. 3 is a sectional view of a gamma camera head incorporating a third embodiment of the invention; and

Fig. 4 is a sectional view of a gamma camera head employing a fourth embodiment of the invention.

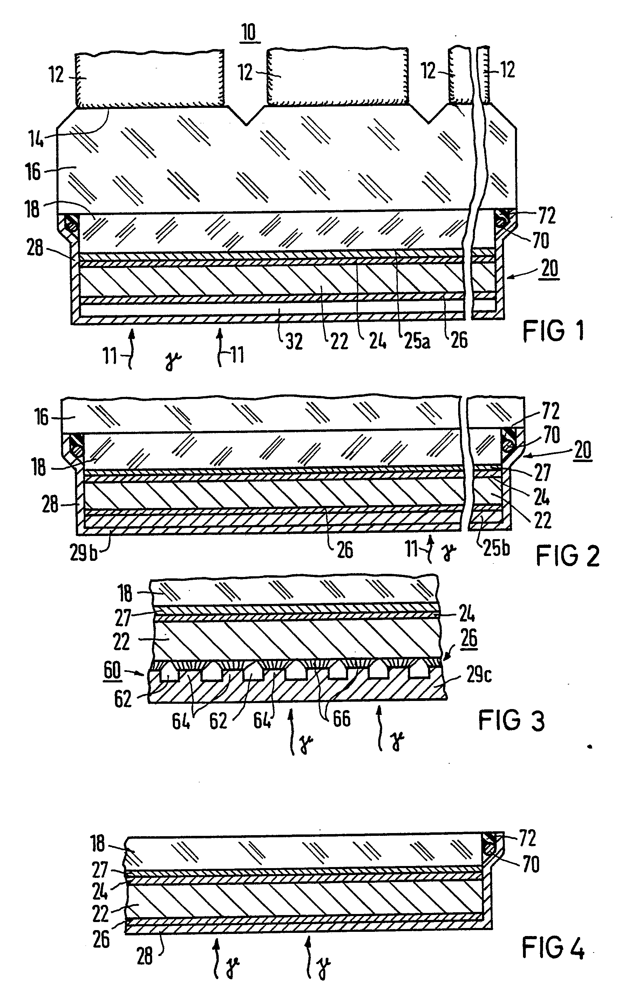

In the embodiments of Figures 1 to 4, an evaporated scintillation layer is utilized. The material for the scintillation layer is preferably an alkali metal halide, such as potassium iodide or cesium iodide, which is activated by a scintillating activator. In these embodiments, the different coefficients of expansion of the scintillation layer and the adjoining material, respectively, are taken into account by an elastic intermediate layer, by a certain structure of the surface of the scintillation layer and/or by an elastic light coupling medium. Due to these measures, breaking or cracking of the scintillation layer can be eliminiated to a large extent.

Fig. 1 illustrates a portion of a detector head 10 of a scintillation camera for detection of gamma quanta 11. The detector head 10 encompasses a predetermined number of photomultiplier tubes 12 which in a hexagonal array adjoin the circular elevations or pads 14 of a light pipe 16. The light pipe 16 may consist e.g. of Plexi glass. In front of the light pipe 16 there is arranged a glass plate 18 which preferably is made of Plexi glass. The glass plate 18 has an even thickness across its longitudinal dimensions of 1.3 cm, for example, and a diameter of 45 cm or more, for example. The glass plate 18 is a component of a scintillation crystal arrangement which is generally referred to as 20.

The scintillation crystal arrangement 20 comprises a scintillation layer 22 which converts the energy of impinging gamma quanta 11 into light. The material of this scintillation layer 22 may have relatively poor mechanical properties; however, it should have a relatively high energy resolution. The layer 22 may preferably be a layer of an alkali halide which is doped with an activator. Preferably, the scintillation layer 22 may contain sodium iodide (NaJ) as a matrix substance which is activated by thallium (Tl). Instead, the matrix layer may consist of cesium iodide (CsJ) to which is added a suitable activator such as sodium or europium.

The different coefficients of thermal expansion of the Pyrex glass plate 18 on the one hand and the scintillation layer 22 comprising sodium iodide or cesium iodide on the other hand do not permit for a direct connection or attachment of these two materials. In order to avoid problems during the production process, an anorganic or organic intermediate layer 25a having elastic properties is provided between the two layers 18 and 22.

The production is performed as follows: the Pyrex glass plate 18 is used as a substrate, and the elastic intermediate layer 25a is deposited onto this glass plate 18 or attached thereto in a suitable manner. The intermediate layer 25a must be colourless and light transparent in this embodiment. It should not fluoresce and should be adapted to the Pyrex glass plate 18 with respect to the index of refraction. Subsequently the NaJ or CsJ scintillation layer 22 doped with an activator is evaporated onto the elastic intermediate layer 25a. In the production of the embodiment according to Fig. 1, the process of building the arrangement 20 is performed from the side where the light will exit later on.

The combination of the layers 18, 25a and 22 is placed in a pot-shaped housing portion 28. This housing portion 28 may preferably be made of aluminum. A space 32 is provided between the end of this combination facing the gamma radiation entrance side on the one hand and the bottom of the housing portion 28 on the other hand. This space 32 may be empty or, preferably, filled with a light reflecting material. The scintillation layer 22 is hermetically sealed in the housing 18, 28. Simultaneously it is protected against humidity. The Pyrex glass plate 18 serves as a lid for the pot-shaped housing portion 28.

In Fig. 2, there is illustrated an embodiment in which the bottom wall 29b of the pot-shaped housing portion 28 is utilized as a substrate. The housing portion 28 may again preferably be made of aluminum. In the production process, an anorganic or organic intermediate layer 25b having elastic properties is attached or bounded to the bottom wall 29b. Subsequently the scintillation layer 22 is evaporated on the intermediate layer 25b. Thus, in the production process of the embodiment according to Fig. 2 the build-up is performed from the gamma radiation entrance side. The elastic intermediate layer 25b again prevents the scintillation layer 22 from detaching from the substrate (bottom wall 29b) and crumbling under thermal stress. In contrast to the elastic intermediate layer 25a shown in Fig. 1, the optical requirements mentioned above are relaxed or eliminated with respect to the elastic intermediate layer 25b. The intermediate layer 25b should be made from a material that hardly absorbs the impinging gamma radiation 11. The intermediate layer 25b again should have an equal thickness. The intermediate layer 25b may be coloured by a reflection medium, such as $TiO_2$ or MgO.

In Fig. 2 is illustrated that the scintillation layer 22 proper is attached to the Pyrex glass plate 18 via an intermediate layer 24 and via a thin optical coupling layer 27 of an elastic material. The intermediate layer 24 is provided for protection purposes and may comprise cesium iodide (CsJ). In contrast thereto, the intermediate layer 24 may also be eliminated altogether. The arrangement of the four layers 25b, 22, 24 and 27 is again placed in a pot-formed housing portion 28 made of aluminum. The scintillation crystal arrangement 20 thus formed is attached to the light pipe 16 in accordance with the embodiment of Fig. 2

In Fig. 3 another possibility for compensation of the coefficients of expansion of a substrate 29c on the one side and an evaporated scintillation layer 22c on the other side is illustrated. Again these coefficients are assumed to be different from each other. In this embodiment an elastic intermediate layer is not required. The substrate 29c again comprises a metal, preferably aluminum. The substrate 29c may again be formed by the bottom wall of the housing portion 28 which houses the scintillation crystal arrangement 20. In this embodiment, a substrate 29c having a structured surface 60 is applied. The term "structured" is intended to mean herein any uneven formation or design of the surface 60. Particularly, the surface 60 may be provided with a plurality of narrow grooves. As illustrated, the surface 60 is provided with a number of parallel grooves 62 which are disposed perpendicularly to additional parallel grooves (not shown). The elevations or crests between the grooves 62 are denoted by reference numeral 64. If a scintillation layer 22c is evaporated on such a structured surface 60, a division of the layer 22c is achieved which takes the form of columns 66. These columns 66 consist of small needle-shaped crystals of the scintillation crystal materials. Also in this embodiment, the scintillation layer 22c is coupled to a Pyrex glass plate 18 via an optical coupling layer 27.

In the embodiment according to Fig. 3, any expansion or contraction due to heating or cooling is distributed across a large number of small grooves 62 and elevations 64. Thereby, a generation of large and broad cracks is avoided in the production and in the operation of the scintillation crystal arrangement 20.

In Fig. 4, there is shown another possibility for the compensation of different thermal expansion of a scintillation layer on the one hand and an adjacent layer on the other hand. The basic idea in this embodiment is to use a freely supported scintillation layer 22d. Such a freely supported scintillation layer 22d may be produced according to a method that is described in detail in German Patent 22 47 524 (corresponds to U.S. Patent 3,980,888). The freely supported layer 22d may comprise, for instance, an activated sodium iodide. Both sides of the layer 22d are covered, e.g. due to evaporation, with a non-activated protective layer 24 and 26, respectively. These protective layers 24, 26 may preferably consist of cesium iodide. The combination of the layers 22d, 24, 26 is coupled to a Pyrex glass plate 18 via a coupling layer 27, e.g. made of silicon rubber. Also in this instance the coupling medium 27 serves two purposes: firstly it provides for an optical coupling, and secondly it provides for a compensation or an equalization of the coefficients of thermal expansion. The combination of the layers 26, 22d, 24, 27 and 18 may again be introduced into a pot-shaped housing portion 28 and attached therein. The attachment may be performed in a manner known per se. For instance, there may be provided a cord or string 70 arranged in a circular fashion around the layer 18. The cord 70 is provided for sealing purposes. It is arranged at the upper rim portion of the housing 28 and attached there by means of an epoxy resin packing 72. The packing 72 provides for a reliable bonding. Also in this embodiment the housing portion 28 is preferably made out of a metal such as aluminum. Similar means 70, 72 for sealing the scintillation crystal arrangement are also shown in Figs. 1 and 2.

## Claims

1. A scintillation crystal arrangement for a radiation detector, said arrangement comprising:

a) a substrate (18; 29b);

b) an elastic intermediate layer (25a; 25b) provided on said substrate (18; 29b); and

c) a scintillation layer (22) evaporated on said intermediate layer (18; 29b), said scintillation layer (22) emitting light in response to impinging gamma radiation (11).

2. The arrangement of claim 1, wherein said substrate (18) is a glass plate, and wherein said intermediate layer (25a) is transparent with respect to light and colourless.

3. The arrangement of claim 1, wherein said substrate (29b) is a metal layer, said layer having an equal thickness across its longitudinal dimensions and displaying a comparatively low absorption with respect to gamma radiation (11).

4. The arrangement of claim 3, wherein said substrate (18) comprises a metal layer of aluminum.

5. The arrangement of claim 1, 3 or 4, wherein said intermediate layer (25b) is a light reflecting layer.

6. A scintillation crystal arrangement for a radiation detector, said arrangement comprising:

    a) a substrate (29c) having an uneven surface (60); and

    b) a scintillation layer (22c) evaporated on said substrate (29c), said scintillation layer (22c) emitting light in response to impinging gamma radiation (11).

7. The arrangement of any of the claims 1 through 6, comprising a housing (28) for enclosing said scintillation layer (22), wherein said substrate (18; 29b; 29c) is a portion of said housing (28).

8. The arrangement of claim 6 or 7, wherein said surface (60) of said substrate (29c) is provided with a plurality of elevations (64), each of said elevations (64) having evaporated on its surface a column (66) of a scintillation layer material.

9. The arrangement of claim 6, 7 or 8, wherein said substrate (29c) is a metal.

10. The arrangement of claim 9, wherein said substrate (29c) is aluminum.

11. The arrangement of any of the claims 6 through 10, wherein said surface (60) contains a first and second plurality of grooves (62), said first plurality of grooves (62) being arranged perpendicularly to said second plurality of grooves.

12. A scintillation crystal arrangement for a radiation detector, said arrangement comprising:

    a) a freely supported scintillation layer (22d) emitting light in response to impinging gamma radiation (11);

    b) two protective layers (24, 26), said scintillation layer (22d) being sandwiched by said protective layers (24, 26); and

    c) an elastic light coupling medium (27) for coupling one of said two protective layers (24, 26) to a glass plate (18).

13. The arrangement of claim 12, wherein said light coupling medium (27) is a silicon rubber.

14. The arrangement of claim 12 or 13, wherein said scintillation layer (22d) comprises activated sodium iodide (NaJ), and wherein said protective layers (24, 26) comprise non-activated cesium iodide (CsJ).

15. The arrangement of any of the claims 1 through 14, wherein said scintillation layer (22; 22c; 22d) is contained in a pot-shaped housing (28) made of aluminum, and wherein said housing (28) is covered by a glass plate (28).

83 P 7442 E 01

<u>10</u>

12      12      12      12

14

16

18      72
        70
28      <u>20</u>

32  22  24  25a  26      FIG 1

11      11

16      72
        70
18      <u>20</u>
        27
28      24
        22
29b      26      11      25b      FIG 2

18      24
27
22      <u>26</u>
        29c
<u>60</u>
62

64  62  64      66      FIG 3

18      72
27      70
24
22
26
28      FIG 4